# EUROPEAN PATENT SPECIFICATION

(11) **EP 4 047 339 B1**
(45) Date of publication and mention of the grant of the patent: **22.04.2026**
(21) Application number: 20876296.3
(22) Date of filing: 29.09.2020
(51) Int. Cl.: G01L 1/22, G01B 7/16

(54) **STRAIN SENSOR AND STRAIN MEASUREMENT METHOD**
DEHNUNGSSENSOR UND DEHNUNGSMESSVERFAHREN
CAPTEUR DE CONTRAINTE ET PROCÉDÉ DE MESURE DE CONTRAINTE

(30) Priority: 16.10.2019 JP 2019189700
(43) Date of publication of application: 24.08.2022
(73) Proprietor: Minebea Mitsumi Inc., Kitasaku-gun, Nagano 3890293 (JP)
(72) Inventor: ISHIZUKA Hiroyuki, Kitasaku-gun, Nagano 389-0293 (JP); KURASHIMA Kiyotaka, Kitasaku-gun, Nagano 389-0293 (JP)
(74) Representative: Dennemeyer & Associates S.A.
(86) International application number: PCT/JP2020/036773
(87) International publication number: WO 2021/075251

(56) References cited:
- DE-A1- 102011 119 349
- JP-A- 2019 045 250
- JP-A- H09 159 515
- JP-U- 3 215 728
- SU-A1- 1 401 260

## Description

### Technical Field

The present invention relates to a strain sensor and a strain measurement method.

### Background Art

It is known to dispose a strain sensor in a structure of a machine tool, such as a press working machine, to measure machining force.

Patent Document 1 discloses a load cell including a bolt and a strain gauge attached to the bolt. Patent Document 1 also discloses that the load cell is regularly disposed at a plate of a press machine, and a distribution of stress generated at the plate due to a load from a punch is obtained. Patent Document 2 discloses a load cell to measure tensile forces. The flexure plate to which the strain gauge is attached to is exhibits a pair of protruding sections.

### Citation List

### Patent Literature

Patent Document 1: JP 6370005 B
Patent Document 2: DE 10 2011 119349 A1

### Summary of Invention

### Technical Problem

An object of the present invention is to provide a strain sensor and a strain measurement method capable of measuring a strain generated in a subject with high accuracy.

### Solution to Problem

According to a first aspect of the present invention, a strain sensor installed inside a subject is provided, the strain sensor including a flexure plate having a flat plate shape, a strain gauge attached to the flexureflexure plate, and a pair of protruding portions protruding from the flexureflexure plate at both sides along an in-plane direction of the flexureflexure plate, and the strain gauge is attached to a region sandwiched between the pair of protruding portions, the region being in the flexureflexure plate, wherein a tubular cover including an inner peripheral surface, the tubular cover housing the flexure plate and the pair of protruding portions in a state where top portions of the pair of protruding portions are in contact with the inner peripheral surface, wherein the tubular cover is configured such that an outer diameter of the tubular cover is increased by the pair of protruding portions pushing the tubular cover.

The strain sensor of the first aspect may further include a tubular cover including an inner peripheral surface, the tubular cover housing the flexureflexure plate and the pair of protruding portions in a state where top portions of the pair of protruding portions are in contact with the inner peripheral surface, and the tubular cover may be configured such that an outer diameter of the tubular cover is increased by the pair of protruding portions pushing the tubular cover.

In the strain sensor of the first aspect, the outer diameter of the tubular cover may increase by relative movement of the pair of protruding portions and the tubular cover in an axial direction of the tubular cover.

In the strain sensor of the first aspect, a slit extending in the axial direction of the tubular cover may be formed in the tubular cover.

In the strain sensor of the first aspect, the pair of protruding portions may be symmetrically formed with respect to the axis of the tubular cover.

In the strain sensor of the first aspect, top portions of the pair of protruding portions may be inclined in a tapered shape with respect to the axial direction of the tubular cover.

In the strain sensor of the first aspect, the inner peripheral surface of the tubular cover may be inclined in the tapered shape with respect to the axial direction of the tubular cover.

In the strain sensor of the first aspect, a connector for connecting the flexure plate and the tubular cover with each other so as to be movable relative to each other in the axial direction of the tubular cover may be further included.

The strain sensor of the first aspect may further include an orientation adjustment assisting portion for assisting orientation adjustment of the flexure plate inside the subject.

In the strain sensor of the first aspect, the strain gauge may include two first direction strain sensitive elements for measuring a strain generated in a first direction, the pair of protruding portions protruding from the flexure plate in the first direction, and two second direction strain sensitive elements for measuring a strain generated in a second direction orthogonal to the first direction in the plane of the flexure plate, and the two first direction strain sensitive elements and the two second direction strain sensitive elements may form a Wheatstone bridge circuit.

According to a second aspect of the present invention, a method of measuring a strain of a subject generated in a measurement direction is provided, the method including forming a hole extending in a direction orthogonal to the measurement direction in the subject, inserting a strain sensor of the first aspect into the hole, and bringing an outer peripheral surface of the tubular cover into contact with an inner peripheral surface of the hole by increasing an outer diameter of the tubular cover.

### Advantageous Effects of Invention

According to a strain sensor and a strain measurement method of the present invention, a strain generated in a subject can be measured with high accuracy.

### Brief Description of Drawings

FIG. 1 is an exploded perspective view of a strain sensor according to an embodiment of the present invention.
FIG. 2 is a perspective view of the strain sensor according to the embodiment of the present invention.
FIG. 3 is a plan view of a plate portion.
FIG. 4(a) is a plan view illustrating an example of a strain gauge, and FIG. 4(b) is a plan view illustrating another example of the strain gauge.
FIG. 5(a) and FIG. 5(b) are cross-sectional views of the strain sensor according to the embodiment of the present invention along a central axis. FIG. 5(a) illustrates a normal state, and FIG. 5(b) illustrates a state. In the state, the tubular cover is expanded and the diameter of the tubular cover is increased.
FIG. 6 is a schematic view of a press working machine. The strain sensor is installed at the press working machine.
FIG. 7 is a flowchart illustrating a procedure of a strain measurement method according to the embodiment of the present invention.
FIG. 8(a) to FIG. 8(c) are explanatory diagrams for describing a procedure of the strain measurement method. FIG. 8(a) illustrates a state. In the state, a measurement hole is formed in a die plate. FIG. 8(b) illustrates a state. In the state, the strain sensor is inserted into the measurement hole. FIG. 8(c) illustrates an installation complete state. In the state, an outer peripheral surface of the strain sensor is brought into close contact with an inner peripheral surface of the measurement hole.
FIG. 9(a) and FIG. 9(b) are explanatory diagrams for describing significance of protruding portions included in the plate portion. FIG. 9(a) illustrates a state. In the state, a load X is applied to a plate portion of a comparative aspect without the protruding portions. FIG. 9(b) illustrates a state. In the state, the load X is applied to a plate portion including the protruding portions.

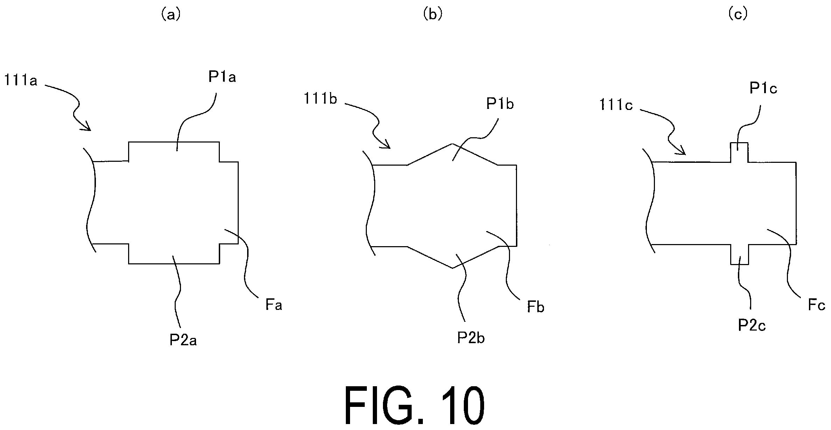

Each of FIG. 10(a) to FIG. 10(c) is a plan view illustrating a modified example of protruding portions included in a plate portion.

### Description of Embodiments

### Embodiments

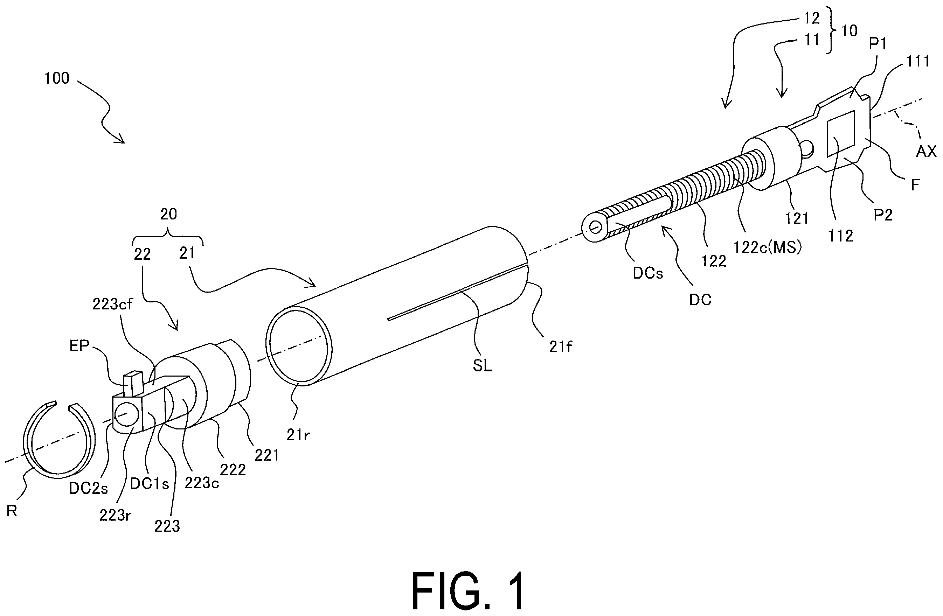

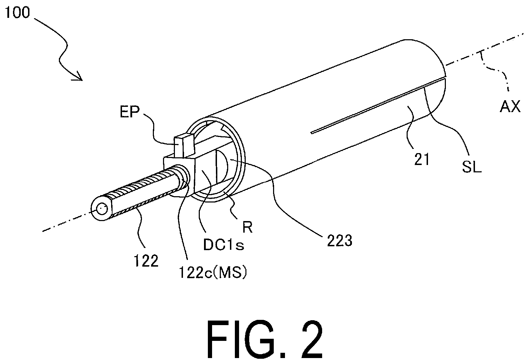

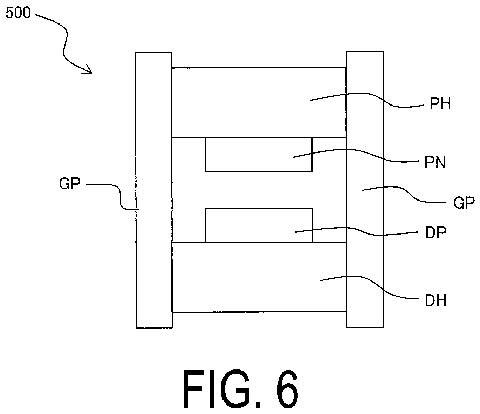

A strain sensor 100 according to an embodiment of the present invention will be described with reference to an example. In the example, the strain sensor 100 (FIG. 1 and FIG. 2) is embedded in a die plate DP of a press working machine 500 (FIG. 6) to be used.

As illustrated in FIG. 1 and FIG. 2, the strain sensor 100 of the embodiment mainly includes a main body part 10 and a cover part 20. The cover part 20 includes a tubular cover 21 having a cylindrical shape, and a large portion of the main body part 10 is housed inside the tubular cover 21.

In the following description, a central axis of the tubular cover 21 is referred to as a central axis AX of the strain sensor 100, and a direction, the central axis AX extending in the direction, is referred to as an axial direction. A side having a portion of the main body part 10 (small diameter cylindrical portion 122 described below) protruding from the tubular cover 21 is referred to as an axial direction rear side, and the opposite side of the axial direction rear side is referred to as an axial direction front side. Furthermore. A radial direction and a circumferential direction of the tubular cover 21 are referred to as a radial direction and a circumferential direction, respectively, of the strain sensor 100.

The main body part 10 mainly includes a strain detector 11 and a main body side connector 12 coupled to the axial direction rear side of the strain detector 11.

The strain detector 11 includes a plate portion 111 and a strain gauge 112 attached to the plate portion 111.

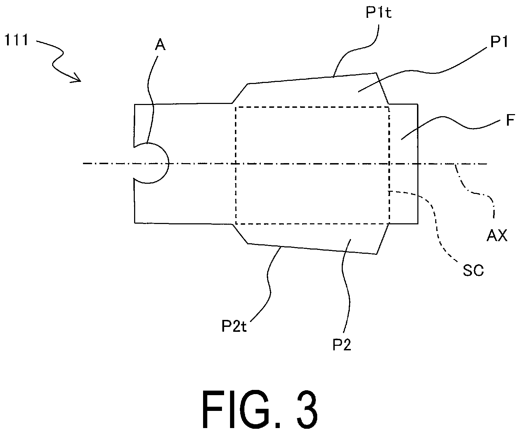

The plate portion 111 is, as an example, a flat plate having a substantially cross shape and formed of a metal such as stainless steel. A thickness of the plate portion 111 may be, as an example, approximately from 0.5 mm to 1.5 mm, but is not limited to from 0.5 mm to 1.5 mm and is freely selected. As illustrated in FIG. 3, the plate portion 111 includes a flexure portion F for receiving a load from the outside during strain measurement to generate a strain, and a pair of protruding portions P1 and P2 for transmitting the load from the outside during the strain measurement to the flexure portion F.

The flexure portion F has a rectangular shape, a longitudinal direction coincides with the axial direction of the strain sensor 100, and a lateral direction coincides with the radial direction of the strain sensor 100. Furthermore, the central axis AX passes through a center portion in the lateral direction and a thickness direction of the flexure portion F.

An opening A is formed at one end of the flexure portion F in the longitudinal direction. The opening A communicates with a space around the plate portion 111 via a short side of the flexure portion F.

The protruding portion P1 protrudes in a trapezoidal shape from one long side of the flexure portion F to a short side direction of the flexure portion F (in other words, an in-plane direction of the flexure portion F). The protruding portion P2 protrudes in the trapezoidal shape from another long side of the flexure portion F to the short side direction of the flexure portion F. The protruding portion P1 and the protruding portion P2 have the same shape and are symmetrically disposed with respect to the central axis AX.

Each of top portions P1t and P2t of the protruding portions P1 and P2 extends in the axial direction with a predetermined inclination angle with respect to the central axis AX such that a distance from the flexure portion F increases as the top portion advances toward a front side of the strain sensor 100 in the axial direction. As a result, the top portions P1t and P2t of the protruding portions P1 and P2 form symmetrical tapers with respect to the central axis AX.

A strain concentrated region (stress concentrated region) SC is defined in a region sandwiched between the protruding portion P1 and the protruding portion P2 of each surface facing a radial direction of the flexure portion F (surface facing a direction orthogonal to the paper surface in FIG. 3). The strain concentrated region SC is a region where a particularly large strain (and stress) is generated among the flexure portion F in a case where the load from the outside is applied to the plate portion 111 (details will be described later).

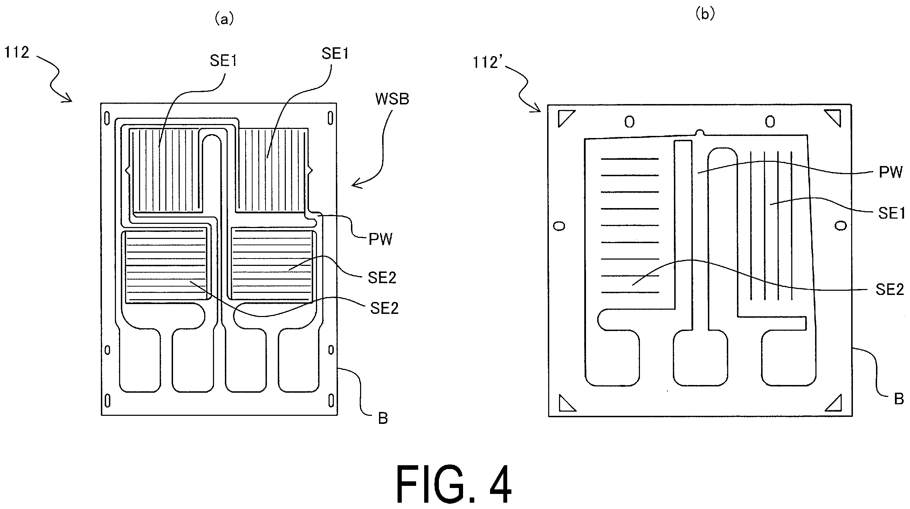

As illustrated in FIG. 4(a), the strain gauges 112 mainly includes a flexible substrate B having a rectangular shape and two first direction strain sensitive elements SE1 and two second direction strain sensitive elements SE2 formed at the flexible substrate B. The first direction strain sensitive elements SE1 are configured to be capable of detecting a strain generated in a predetermined first direction (here, a longitudinal direction of the flexible substrate B), and the second direction strain sensitive elements SE2 are configured to be capable of detecting a strain generated in a second direction orthogonal to the first direction (here, a lateral direction of the flexible substrate B).

The two first direction strain sensitive elements SE1 and the two second direction strain sensitive elements SE2 are connected with each other by a printed wiring PW so as to constitute a Wheatstone bridge circuit WSB.

The strain gauge 112 is attached to the strain concentrated region SC at one surface side of the flexure portion F of the plate portion 111 such that the first direction coincides with the lateral direction of the flexure portion F (the radial direction of the strain sensor 100), and the second direction coincides with the longitudinal direction of the flexure portion F (the axial direction of the strain sensor 100).

The main body side connector 12 cooperates with a cover side connector 22 (described later) of the cover part 20 to connect the main body part 10 and the cover part 20 with each other so as to be relatively movable in the axial direction.

The main body side connector 12 is formed of, as an example, a metal such as stainless steel, and includes a large diameter cylindrical portion 121 and the small diameter cylindrical portion 122 coaxially coupled to the large diameter cylindrical portion 121 at the axial direction rear side of the large diameter cylindrical portion 121. An outer diameter of the small diameter cylindrical portion 122 is smaller than an outer diameter of the large diameter cylindrical portion 121. Central axes of the large diameter cylindrical portion 121 and the small diameter cylindrical portion 122 coincide with the central axis AX of the strain sensor 100.

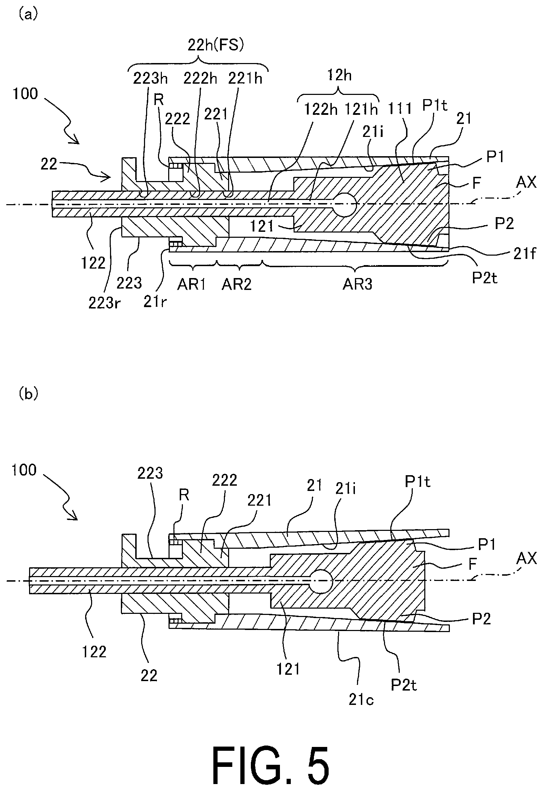

As illustrated in FIG. 5(a), an inner hole 121h of the large diameter cylindrical portion 121 and an inner hole 122h of the small diameter cylindrical portion 122 have the same diameter, and communicate with each other to form an inner hole 12h.

A male thread MS is formed in an entire region of an outer peripheral surface 122c of the small diameter cylindrical portion 122. Furthermore, a D-cut portion DC is formed at a rear end portion of the small diameter cylindrical portion 122, and a D-cut surface DCs extends in a plane parallel to the central axis AX. Another D-cut portion opposing the D-cut portion DC in the radial direction may be formed at the rear end portion of the small diameter cylindrical portion112, and a D-cut surface parallel to the D-cut surface DCs may be formed.

The strain detector 11 and the main body side connector 12 are integrally connected with each other in a state where a rear edge of the plate portion 111 of the strain detector 11 is fixed to a front surface of the large diameter cylindrical portion 121 of the main body side connector 12. The plate portion 111 is connected to the large diameter cylindrical portion 121 so as to pass through the central axis of the large diameter cylindrical portion 121. In this state, the opening A of the flexure portion F of the plate portion 111 and the inner hole 12h of the main body side connector 12 communicate with each other.

Furthermore, the strain detector 11 and the main body side connector 12 are coupled to each other such that a surface of the flexure portion F having the plate shape facing the radial direction (in other word, the strain concentrated region SC is defined at the surface) and the D-cut surface DCs face the same direction, that is, are parallel to each other.

The plate portion 111 of the strain detector 11 and the main body side connector 12 may be integrally formed by machining from, for example, a round bar of a metal such as stainless steel.

The cover part 20 mainly includes the tubular cover 21 and the cover side connector 22 rotatably inserted in the vicinity of a rear end 21r of the tubular cover 21.

As illustrated in FIG. 2 and FIG. 5(a), the tubular cover 21 is disposed at the outer side of the main body part 10 in the radial direction, and covers the entirety of the strain detector 11 and a large portion of the main body side connector 12. In other words, the entirety of the strain detector 11 of the main body part 10 and the large portion of the main body side connector 12 are housed inside the tubular cover 21.

The tubular cover 21 is formed of, as an example, a metal such as stainless steel. The outer diameter of the tubular cover may be, as an example, approximately from 5 mm to 30 mm.

As illustrated in FIG. 5(a), the tubular cover 21 is partitioned into three regions of a first region AR1, a second region AR2, and a third region AR3 from the rear end 21r toward a front end 21f, and inner diameters are different from each other in each region.

In each region of the first region AR1 and the second region AR2, the inner diameter is constant, and the inner diameter in the first region AR1 is larger than the inner diameter in the second region AR2. The inner diameter in the third region AR3 gradually increases from the axial direction rear side toward the front side. That is, in the third region, an inner peripheral surface 21i of the tubular cover 21 forms a symmetrical taper with respect to the central axis AX.

Slits SL extending rearward from the front end 21f are formed at equal intervals at three locations of the tubular cover 21 in the circumferential direction. Each of slits SL extends across an entire region of the third region AR3 and a substantially half region at a front side of the second region AR2.

The cover side connector 22 cooperates with the main body side connector 12 of main body part 10 to connect the main body part 10 and the cover part 20 with each other so as to be relatively movable in the axial direction.

The cover side connector 22 is formed of, as an example, a metal such as stainless steel. The cover side connector 22 includes a small diameter cylindrical portion 221, a large diameter cylindrical portion 222 coaxially coupled to the small diameter cylindrical portion 221 at the axial direction rear side of the small diameter cylindrical portion 221, and an engagement tube portion 223 coaxially coupled to the large diameter cylindrical portion 222 at the axial direction rear side of the large diameter cylindrical portion 222. The central axes of the small diameter cylindrical portion 221, the large diameter cylindrical portion 222, and the engagement tube portion 223 coincide with the central axis AX of the strain sensor 100.

An outer diameter of the small diameter cylindrical portion 221 is smaller than an outer diameter of the large diameter cylindrical portion 222.

The engagement tube portion 223 has a substantially cylindrical shape and a portion of an outer peripheral surface 223c is cut away in a plane parallel to the central axis to form a flat surface portion 223cf. An engagement protruding portion EP of a cuboid body protruding from the flat surface portion 223c in the radial direction is provided at a rear end 223r of the engagement tube portion 223. Furthermore, a pair of D-cut portions are formed in the vicinity of the rear end 223r of the engagement tube portion 223, and D-cut surfaces DC1s and DC2s extend in a plane parallel to the central axis AX, along with being parallel to each other and orthogonal to the flat surface portion 223cf.

As illustrated in FIG. 5(a), an inner hole 221h of the small diameter cylindrical portion 221, an inner hole 222h of the large diameter cylindrical portion 222, and an inner hole 223h of the engagement tube portion 223 have the same diameter, and communicate with each other to form an inner hole 22h. A female thread FS is formed at an inner peripheral surface defining the inner hole 22h.

The cover side connector 22 is inserted into the vicinity of the rear end 21r of the tubular cover 21 coaxially with the tubular cover 21, and is prevented from falling out by a notch ring R. In a state where the cover side connector 22 is inserted into the tubular cover 21, the entirety of the small diameter cylindrical portion 221, the entirety of the large diameter cylindrical portion 222, and the vicinity of the front end of the engagement tube portion 223 are housed inside the tubular cover 21, and the rear end 223r side of the engagement tube portion 223 protrudes to the rear side of the tubular cover 21.

Specifically, as illustrated in FIG. 5(a), the small diameter cylindrical portion 221 is disposed in the second region AR2 of the tubular cover 21 in a state where the outer peripheral surface of the small diameter cylindrical portion 221 is in contact with the inner peripheral surface 21i of the tubular cover 21. The large diameter cylindrical portion 222 is disposed in the first region AR1 of the tubular cover 21 in a state where the outer peripheral surface of the large diameter cylindrical portion 222 is in contact with the inner peripheral surface 21i of the tubular cover 21. The notch ring R is disposed in the first region AR1 in the vicinity of the rear end 21r of the tubular cover 21, and is fixed to the tubular cover 21. Thus, the cover side connector 22 is held in the tubular cover 21 in a state where a movement in the axial direction is restricted and only a rotational movement is possible.

The main body part 10 and the cover part 20 are connected with each other to be coaxially and relatively movable in the axial direction by a function of the threads by inserting the small diameter cylindrical portion 122 of the main body side connector 12 of the main body part 10 into the inner hole 22h of the cover side connector 22 of the cover part 20 and screwing the male thread MS and the female thread FS. Thus, the main body side connector 12 and the cover side connector 22 constitute a connector (connection mechanism) for connecting the main body part 10 and the tubular cover 21 with each other so as to be relatively movable in the axial direction.

In the state where the main body part 10 and the cover part 20 are connected with each other, and the plate portion 111 is housed inside the tubular cover 21, as illustrated in FIG. 5(a), each of the top portions P1t and P2t of the protruding portions P1 and P2 is in contact with the inner peripheral surface 21i of the tubular cover 21 in the third region AR3 of the tubular cover 21.

In this state, in a case where the cover side connector 22 is rotated, the main body part 10 moves in the axial direction. In a case where the main body part 10 is moved to the axial direction rear side, the protruding portions P1 and P2 push and expand the tubular cover 21 outward in the radial direction, and the outer diameter of the tubular cover 21 is increased (FIG. 5(b)).

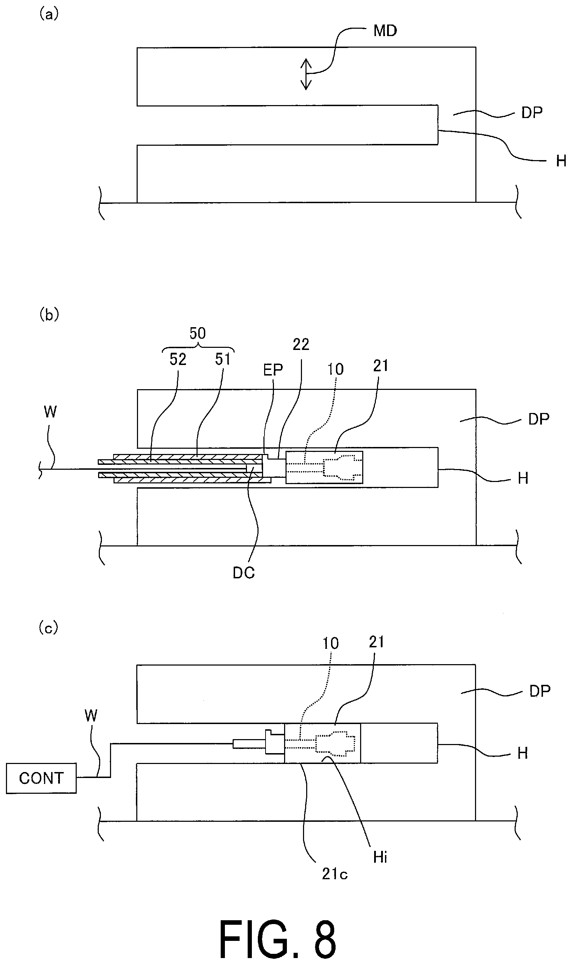

A wiring W (FIG. 8(b) and FIG. 8(c)) extending from the strain gauge 112 attached to the flexure portion F of the plate portion 111 is drawn out to the rearward of the strain sensor 100 through the opening A and the inner hole 12h. Note that the wiring W is not illustrated in the drawings other than FIG. 8(b) and FIG. 8(c).

Next, a method of measuring a strain generated in the die plate DP of the press working machine 500 by using the strain sensor 100 of the embodiment will be described.

As illustrated in FIG. 6, the press working machine 500 includes the die plate DP, a die plate holder DH for holding a die plate DP, a punch PN, a punch holder PH for holding the punch PN, and a plurality of guide posts GP for supporting the punch holder PH vertically movable with respect to the die plate holder DH. In a case where press working is performed using the press working machine 500, pressure by the punch PN is applied to a workpiece at the die plate DP for plastic working or cutting of the workpiece.

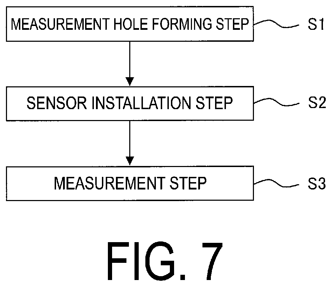

As illustrated in FIG. 7, the strain measurement method of the present embodiment includes a measurement hole forming step S1 of forming, in the die plate DP, a measurement hole H, the strain sensor 100 being installed inside the measurement hole H, a sensor installation step S2 of fixedly installing the strain sensor 100 inside the measurement hole H, and a measurement step S3 of measuring a strain generated in the die plate DP by using the strain sensor 100 inside the measurement hole H.

In the measurement hole forming step S1, the measurement hole H is formed in the die plate DP by using an electric drill or the like. In the present embodiment, since the tubular cover 21 is a cylinder, it is desirable that the measurement hole H be a circular hole having an inner diameter slightly larger than the outer diameter of the strain sensor 100.

As illustrated in FIG. 8(a), the measurement hole H is formed so as to extend orthogonal to a direction. In the direction, a strain of a measurement target is generated (measurement direction MD). In the present embodiment, a strain in a movement direction of the punch PN (in other word, vertical direction) generated in the die plate DP is the measurement target, and the measurement hole H extending in the horizontal direction is formed in the die plate DP.

A position of forming the measurement hole H and a number of measurement holes H may be optionally set depending on a measurement purpose. In general, by forming the measurement hole H at a position where the strain of the measurement target generates more largely, the strain sensor 100 can be disposed at a position where the strain of the measurement target generates more largely, and the accuracy of the strain measurement can be improved. In the die plate DP of the press working machine 500, a position generating the largest strain is typically immediately below a position. At the position, the punch PN presses the die plate DP.

In the sensor installation step S2, first, the strain sensor 100 is inserted in the vicinity of an inlet of the measurement hole H from the front side, and an orientation of the plate portion 111 is adjusted in consideration of the measurement direction MD.

Specifically, the orientation of the plate portion 111 is adjusted such that a surface of the flexure portion F facing the radial direction (a surface where the strain concentrated region SC is defined), that is, a surface with the strain gauge 112 being attached to the surface, is parallel to the measurement direction MD. By disposing the plate portion 111 in this manner, the protruding portions P1 and P2 are disposed at both sides of the flexure portion F in the measurement direction MD, and the strain generated in the measurement direction MD can be detected with higher accuracy using the strain gauge 112 attached to the strain concentrated region SC of the flexure portion F (details will be described later). Note that even when the surface with the strain gauge 112 of the flexure portion F being attached to the surface is inclined approximately 10° with respect to the measurement direction MD, strain detection can be performed with sufficient accuracy.

The orientation of the plate portion 111 can be easily adjusted using the D-cut surface DCs formed at the rear end of the small diameter cylindrical portion 122 of the main body side connector 12. As described above, the strain detector 11 and the main body side connector 12 are coupled to each other such that the surface of the flexure portion F facing the radial direction (the surface where the strain concentrated region SC is defined) and the D-cut surface DCs are parallel to each other. Thus, by making the D-cut surface DCs parallel to the measurement direction MD, the surface of the flexure portion F facing the radial direction can be parallel to the measurement direction MD. That is, the D-cut portion DC functions as the orientation adjustment assisting portion for assisting the orientation adjustment of the plate portion 111 and the flexure portion F.

After adjusting the orientation of the plate portion 111, the strain sensor 100 is pushed into the measurement hole H to an installation planned position. A double cylindrical insertion tool 50 (FIG. 8(b)) is used for the pushing.

The insertion tool 50 includes an outer cylinder 51 having a distal end portion formed so as to be engageable with the engagement protruding portion EP of the cover side connector 22 of the strain sensor 100, and an inner cylinder 52 having a distal end portion formed so as to be engageable with the D-cut portion DC of the main body side connector 12 of the strain sensor 100.

In a case where the strain sensor 100 is pushed using the insertion tool 50, first, the wiring W extending from the strain gauge 112 is passed through an inner hole of the inner cylinder 52 (or between the inner cylinder 52 and the outer cylinder 51). Next, the insertion tool 50 is inserted into the measurement hole H in a state where the distal end portion of the inner cylinder 52 is engaged with the D-cut portion DC and the distal end portion of the outer cylinder 51 is engaged with the engagement protruding portion EP, and the strain sensor 100 is pushed into the measurement hole H.

After the strain sensor 100 is pushed to the installation planned position, only the outer cylinder 51 is rotated in a state where the inner cylinder 52 is fixed. Thus, the cover side connector 22 is rotated in a state where the rotation of the main body part 10 is restricted, and the main body part 10 is moved rearward with respect to the tubular cover 21. At this time, the protruding portions P1 and P2 of the plate portion 111 of the strain detector 11 press the inner peripheral surface 21i of the tubular cover 21 toward the outer side in the radial direction, and thus the outer diameter of the tubular cover 21 is increased (FIG. 5(b)), and an outer peripheral surface 21c of the tubular cover 21 is brought into close contact with an inner peripheral surface Hi for defining the measurement hole H (FIG. 8(c)). Since the rotation of the main body part 10 is restricted, the orientation being adjusted of the plate portion 111 is maintained.

The outer peripheral surface 21c of the tubular cover 21 is in close contact with the inner peripheral surface Hi for defining the measurement hole H, and thus the strain sensor 100 is fixedly installed inside the measurement hole H. In this state, the top surfaces P1t and P2t of the protruding portions P1 and P2 of the plate portion 111 are in close contact with the inner peripheral surface 21i of the tubular cover 21, and the outer peripheral surface 21c of the tubular cover 21 is in close contact with the inner peripheral surface Hi for defining the measurement hole H, and thus the strain generated in the die plate DP is favorably transmitted to the flexure portion F. Thus, the accuracy of the strain detection is improved.

After the strain sensor 100 is fixedly installed in the measurement hole H, the insertion tool 50 is removed, and the wiring W is connected to a control device CONT (FIG. 8(c)).

In a case where a plurality of the strain sensors 100 are disposed, the measurement hole forming step S1 and the sensor installation step S2 are similarly repeated.

In the measurement step S3, the measurement value of the strain generated in the measurement direction MD of the die plate DP is performed mainly using the strain detector 11 of the main body part 10 and the control device CONT. Specifically, procedures are as follows.

In a case where a strain in the measurement direction MD is generated in the die plate DP, the diameter of the installation hole H is decreased, and the protruding portions P1 and P2 are pressed toward the flexure portion F via the tubular case 21. As a result, the flexure portion F is compressed in the measurement direction MD, and a strain is generated in the flexure portion F. Specifically, the strain generated in the flexure portion F is a compressive strain generated in the measurement direction MD (the radial direction of the strain sensor 100), and an elongation strain generated in the direction orthogonal to the measurement direction MD (the axial direction of the strain sensor 100).

The strain gauge 112 attached to the strain concentrated region SC of the flexure portion F detects the strain generated in the strain concentrated region SC by using the two first direction strain sensitive elements SE1 and the two second direction strain sensitive elements SE2. Specifically, resistance values of the two first direction strain sensitive elements SE1 change due to the compressive strain generated in the measurement direction MD, and resistance values of the two second-direction strain sensitive elements SE2 change due to the elongation strain generated in the direction orthogonal to the measurement direction MD.

Due to the changes in the resistance values, a value of an output voltage output by the Wheatstone bridge WSB changes. The control device CONT determines the measurement value of the strain generated in the die plate DP by using a predetermined calculation equation based on the change in the value of the output voltage received via the wiring W.

Here, in the strain sensor 100 according to the present embodiment, the reason why the plate portion 111 of the strain detector 11 includes the protruding portions P1 and P2 protruding from the flexure portion F is as follows.

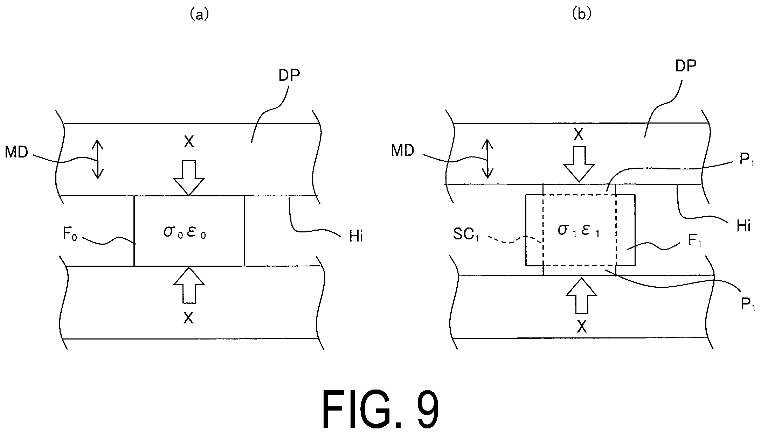

First, as illustrated in FIG. 9(a), an aspect will be considered. In the aspect, side surfaces at long sides of a flexure portion F₀, being a rectangular plate, have a contact area A₀ [mm²], and are in contact with the inner peripheral surface Hi for defining the measurement hole H. In this aspect, in a case where the strain in the measurement direction MD is generated in the die plate DP, and a load X [N] is applied to the flexure portion F₀, a magnitude of the compressive stress generated in the flexure portion F₀ is σ₀ = X/A₀ [N/mm²].

Next, in FIG. 9(b), an aspect will be considered. In the aspect, top surfaces of a pair of protruding portions P₁ protruding from long sides of a flexure portion F₁ having a rectangular shape have a contact area A₁ [mm²], and are in contact with the inner peripheral surface Hi for defining the measurement hole H. In this aspect, in a case where the strain in the measurement direction MD is generated in the die plate DP, and the load X [N] is applied to the flexure portion F₁, a magnitude of the compressive stress generated in a region SC₁ of the flexure portion F₁ sandwiched between the pair of protruding portions P₁ is σ₁ = X/A₁ [N/mm²].

Here, when comparing the magnitudes of the contact areas, A₁ < A₀, and thus the magnitude of the compressive stress is σ₁ > σ₀. A magnitude of the compressive strain generated in a member is proportional to a magnitude of the compressive stress generated in the member according to Hooke's law, and thus the magnitude of the strain is ε₁ > ε₀. Here, ε₀ is the compressive strain generated in the flexure portion F₀ being a rectangular plate, and ε₁ is the compressive strain generated in the region SC₁ of the flexure portion F₁.

In this manner, as in the plate portion 111 of the present embodiment, the protruding portions P1 and P2 are provided to reduce the contact area with the inner peripheral surface Hi of the measurement hole H, and thus a portion is generated. In the portion, a relatively large strain is generated (strain concentrated potion, stress concentrated portion) between the protruding portions P1 and P2. By applying the strain gauge to such a strain concentrated portion, the strain generated in the die plate DP (subject) can be amplified and detected with high sensitivity, and thus the detection and measurement of the strain can be more accurately performed.

Effects of the strain sensor 100 and the strain measurement method of the present embodiment will be summarized below.

The strain sensor 100 of the present embodiment is provided with the protruding portions P1 and P2 at both sides of the flexure portion F of the plate portion 111 in the radial direction, and the strain gauge 112 is attached to the strain concentrated region SC sandwiched between the protruding portions P1 and P2 of the flexure portion F. Thus, the strain generated in the subject such as the die plate DP can be detected with a high sensitivity via a relatively large strain (amplified strain) of the strain concentrated portion SC due to the strain, and thus the strain detection and strain measurement can be performed with high accuracy.

The strain sensor 100 of the present embodiment can be installed at a position where a relatively large strain is generated inside the measurement hole H formed in the subject such as the die plate DP. In this manner, the measurement hole H is formed and the strain sensor 100 is installed at the position where the relatively large strain is generated, that is, at the position where the strain detection can be performed at the high sensitivity, and thus the accuracy of the strain detection and strain measurement can be further enhanced.

The strain sensor 100 of the present embodiment includes the tubular cover 21 capable of increasing the outer diameter. Thus, by pressing the tubular cover 21 with the protruding portions P1 and P2 of the plate portion 111 to increase the outer diameter, it is possible to easily achieve a state. In the state, the protruding portions P1 and P2 of the plate portion 111, the tubular cover 21, and the inner peripheral surface Hi of the measurement hole H are in close contact with each other. By installing the strain sensor 100 in such a state, the strain generated in the subject such as the die plate DP is favorably transmitted to the flexure portion F, and thus the accuracy of the strain detection and strain measurement can be further enhanced.

Specifically, in the present embodiment, the top portions P1t and P2t of the protruding portions P1 and P2 form the taper, and the inner peripheral surface 21i of the tubular cover 21 also forms the taper, and thus the protruding portions P1 and P2 and the inner peripheral surface 21i of the tubular cover 21 are favorably in close contact with each other.

In the strain sensor 100 of the present embodiment, the plate portion 111 includes the flexure portion F, and the flexure portion F has the plate shape. Thus, an aspect can be used. In the aspect, four strain sensitive elements are provided in the flexure portion F, the compressive strain generated in the measurement direction MD is detected by the two strain sensitive elements, and the elongation strain generated in the direction orthogonal to the measurement direction MD is detected by the remaining two strain sensitive elements. By adopting such an aspect and configuring the Wheatstone stone bridge by the four strain sensitive elements, the accuracy of the strain detection and strain measurement can be further enhanced.

### Modifications

In the strain sensor 100 of the above-described embodiment, the following modifications may also be employed.

In the strain sensor 100 of the embodiment described above, each of the protruding portions P1 and P2 has the trapezoidal shape in a plan view, and the tapers are formed by the top portions P1t and P2t, but the present invention is not limited to the embodiment. The shape of the protruding portions is optional, and for example, protruding portions P1a and P2a having a rectangular shape in a plan view may be provided at both sides of a flexure portion Fa, as in a plate portion 111a illustrated in FIG. 10(a), and protruding portions P1b and P2b having a flat triangular shape may be provided at both sides of a flexure portion Fb, as in a plate portion 111b illustrated in FIG. 10(b), and protruding portions P1c and P2c having a substantially square shape may be include at both sides of a flexure portion Fc, as in a plate portion 111c illustrated in FIG. 10(c).

Furthermore, the protruding portions P1 and P2 need not necessarily be formed as the plate portions integrated with the flexure portion F, and may be protruding portions having a column shape, a prism shape, a spherical shape, or the like attached to the flexure portion F having the plate shape and protrude from the flexure portion F.

In this way, the protruding portions P1 and P2 may be any protruding portions configured to be in contact with the inner peripheral surface 21i with a smaller contact area than in a case where the flexure portion F is in direct contact with the inner peripheral surface 21i of the tubular cover 21 (in other words, an area of the top portion facing the radial direction (the in-plane direction of the flexure plate, the protruding direction of the protruding portion) is smaller than an area of a side surface of the flexure plate facing the radial direction (the in-plane direction of the flexure plate, the protruding direction of the protruding portion). Furthermore, the pair of protruding portions at both sides of the flexure portion F need not necessarily have the same shape, and need not be symmetrical about the central axis AX.

In the strain sensor 100 of the embodiment described above, the strain gauge 112 including the two first direction strain sensitive elements SE1 and the two second direction strain sensitive elements SE2 are attached to one side of the flexure portion F, but the present invention is not limited to the embodiment. Strain gauges 112' including a single first direction strain sensitive element SE1 and a single second direction strain sensitive element SE2 as illustrated in FIG. 4(b) may be attached to both sides of the flexure portion F such that the first direction strain sensitive element SE1 and the second direction strain sensitive element SE2 detect strains in the radial direction and the axial direction, respectively, and the two strain gauges 112' may be connected with each other to form the Wheatstone bridge.

Furthermore, it is not necessary to constitute the Wheatstone bridge only by the strain sensitive elements provided in the flexure portion F, and any strain gauge such as a strain gauge of a single gauge including only a single first direction strain sensitive element SE1 or a single second direction strain sensitive element SE2 can be attached to one side or both sides of the flexure portion F.

In the strain sensor 100 of the embodiment described above, the tubular cover 21 is cylindrical, but the present invention is not limited to the embodiment. The tubular cover 21 may be any tubular member such as a tube having a cross-sectional shape of rectangular, polygonal, or the like orthogonal to the axis.

In the strain sensor 100 of the above embodiment, the tubular cover 21 is provided with the plurality of slits SL to make the outer diameter of the tubular cover 21 variable. However, the present invention is not limited to the embodiment, and only a single slit SL may be provided.

Furthermore, the outer diameter of the tubular cover 21 can be made variable without providing the slit SL. Specifically, for example, by sufficiently reducing the thickness of the tubular cover, it is possible to constitute a tubular cover whose outer diameter is increased in accordance with the internal pressure applied from the main body part 10.

The strain sensor 100 of the embodiment described above, is configured such that each of the top portions P1t and the P2t of the protruding portions P1 and the P2 of the main body part 10 and the inner peripheral surface 21i of the tubular cover 21 of the cover part 20 have the tapered shape so as to expand toward the axial direction front side, and the outer diameter of the tubular cover 21 is increased by moving the main body part 10 rearward relative to the tubular cover 21. However, the present invention is not limited to the embodiment, and each of the top portion P1t and the P2t of the protruding portions P1 and the P2 of the main body part 10 and the inner peripheral surface 21i of the tubular cover 21 of the cover part 20 may have the tapered shape so as to expand toward the axial direction rear side. According to this configuration, by moving the main body part 10 forward relative to the tubular cover 21, the outer diameter of the tubular cover 21 is increased.

In the strain sensor 100 of the embodiment described above, the strain detector 11 and the tubular cover 21 are integrally connected with each other to be relatively movable by the main body side connector 12 included in the main body part 10 and the cover side connector 22 included in the cover part 20, but the present invention is not limited to the embodiment.

A strain sensor may be provided. In the strain sensor, the main body side connector 12 and the cover side connector 22 are omitted, and the strain detector 11 is housed in the tubular cover 21 in a state of being separable from the tubular cover 21. In a case where such a strain sensor is installed in the measurement hole H, for example, the strain sensor is pushed into the measurement hole H, and then the strain detector 11 is pulled forward while restricting the movement of the tubular cover 21 by using a predetermined insertion tool. Accordingly, the strain detector 11 moves in the axial direction relative to the tubular cover 21, and the outer diameter of the tubular cover 21 is expanded.

In the strain sensor 100 of the embodiment described above, the D-cut portion DC formed in the main body side connector 12 of the main body part 10 functions as the orientation adjustment assisting portion, but the present invention is not limited to the embodiment. The structure for assisting the orientation adjustment of the plate portion 111 and the flexure portion F is optional, and may be, for example, a mark such as a protruding portion and marking provided at the rear end of the small diameter cylindrical portion 122 of the main body side connector 12.

The strain sensor 100 of the embodiment described above need not necessarily include the tubular cover 21, and for example, the strain sensor can be configured by only the strain detector 11 of the main body part 10.

In a case where such a strain sensor is disposed inside the measurement hole H, for example, the measurement hole H is formed in a tapered shape having a diameter decreasing toward inside, and the strain sensor is pushed into the tapered hole.

As described above, the strain sensor and the strain measurement method of the embodiment and the modified aspect is described with reference to the example of application to the press working machine 500, but the present invention is not limited to the embodiment. The strain sensor and strain measurement method of the embodiment and the modified aspect can be used for any machine tool different from the press working machine, and can be used for any subject different from the machine tool. The subject is not limited to metal, and may be any material such as concrete or resin.

Specifically, for example, the strain sensor of the embodiment or the modified aspect is embedded inside the concrete or the resin, and the main body part 10 and the cover part 20 are moved relative to each other at required time points to expand the outer diameter of the tubular cover, and measure the pre-load value (reaction force) at that time, and thus the hardness of the concrete or the resin can be measured based on the measurement value. Such hardness measurement is not limited to the application to the concrete or the resin, and can also be used for foods such as bread dough. Furthermore, the strain sensor of the embodiment or the modified aspect is embedded in a building or the like in advance, and such hardness measurement is periodically performed, and thus the age-related deterioration of the building or the like can be monitored.

The strain sensor of the embodiment or the modified aspect can also be disposed under water to perform measurement of water pressure. In this case, it is desirable to have a configuration. In the configuration, the strain recognizer provided in the main body part is sealed by the tubular cover.

In a case where vibration is generated in the subject, a slight displacement inside the subject can influence the output of the strain sensor, and thus the strain generated in the subject can also be measured by the strain sensor of the embodiment or the modified aspect.

Engagement can also be confirmed using the strain sensor of the embodiment or the modified aspect. Specifically, for example, by inserting a strain sensor including a tubular cover having a predetermined outer diameter into a hole, and based on whether a value of a strain measured at that time is appropriate, it is possible to determine whether the dimension of the hole is appropriate.

It is also possible to measure tension of a yarn or a cable by using the strain sensor of the embodiment or the modified aspect. Specifically, for example, in a case where the yarn or the cable is erected, a portion wound around the strain sensor of the embodiment or the modified aspect is provided, and the tension of the yarn or the cable is calculated based on a measurement value of the strain sensor.

### Reference Signs List

10 Main body part
11 Strain detector
111 Plate portion
112 Strain gauge
12 Main body side connector
20 Cover part
21 Tubular cover
22 Cover side connector
500 Press working machine
DP Die plate
F Flexure portion
P1 and P2 Protruding portion

## Claims

1. A strain sensor installed inside a subject, the strain sensor comprising:
a flexure plate having a flat plate shape;
a strain gauge (112) attached to the flexure plate;
a pair of protruding portions (P1, P2) protruding from the flexure plate at both sides along an in-plane direction of the flexure plate; and
**characterised by**
a tubular cover (21) including an inner peripheral surface, the tubular cover (21) housing the flexure plate and the pair of protruding portions (P1, P2) in a state where top portions of the pair of protruding portions (P1, P2) are in contact with the inner peripheral surface,
wherein:
the strain gauge (112) is attached to a region sandwiched between the pair of protruding portions (P1, P2), the region being in the flexure plate; andthe tubular cover (21) is configured such that an outer diameter of the tubular cover (21) is increased by the pair of protruding portions (21) pushing the tubular cover.

2. The strain sensor according to claim 1, wherein
an outer diameter of the tubular cover (21) is increased by relative movement of the pair of protruding portions (P1, P2) and the tubular cover (21) in an axial direction of the tubular cover.

3. The strain sensor according to claim 1 or 2, wherein
a slit extending in the axial direction of the tubular cover is formed in the tubular cover (21).

4. The strain sensor according to any one of claims 1 to 3, wherein
the pair of protruding portions (P1, P2) are symmetrically formed with respect to the axis of the tubular cover (21).

5. The strain sensor according to any one of claims 1 to 4, wherein
top portions of the pair of protruding portions (P1, P2) are inclined in a tapered shape with respect to the axial direction of the tubular cover (21).

6. The strain sensor according to any one of claims 1 to 5 wherein
an inner peripheral surface of the tubular cover (21) is inclined in a tapered shape with respect to the axial direction of the tubular cover (21).

7. The strain sensor according to any one of claims 1 to 6, further comprising:
a connector (12) configured to connect the flexure plate and the tubular cover (21) with each other to be relatively movable in the axial direction of the tubular cover.

8. The strain sensor according to any one of claims 1 to 7, further comprising:
an orientation adjustment assisting portion configured to assist orientation adjustment of the flexure plate inside the subject.

9. The strain sensor according to any one of claims 1 to 8, wherein
the strain gauge includes two first direction strain sensitive elements configured to measure a strain generated in a first direction, the pair of protruding portions protruding (P1, P2) from the flexure plate in the first direction, and two second direction strain sensitive elements configured to measure a strain generated in a second direction orthogonal to the first direction in the plane of the flexure plate, and
the two first direction strain sensitive elements and the two second direction strain sensitive elements form a Wheatstone bridge circuit.

10. A method of measuring a strain of a subject generated in a measurement direction comprising:
forming a hole extending in a direction orthogonal to the measurement direction in the subject;
**characterised by**
inserting a strain sensor according to any one of claims 1 to 7 into the hole; and
bringing an outer peripheral surface of the tubular cover (21) into contact with an inner peripheral surface of the hole by increasing an outer diameter of the tubular cover (21).

## Patentansprüche

1. Dehnungssensor, der im Inneren eines Subjekts installiert ist, der Dehnungssensor umfassend:
eine Biegeplatte, die eine flache Plattenform aufweist;
einen Dehnungsmesser (112), der an der Biegeplatte angebracht ist;
ein Paar von vorstehenden Abschnitten (P1, P2), die von der Biegeplatte auf beiden Seiten entlang einer in der Ebene liegenden Richtung der Biegeplatte vorstehen; und
**gekennzeichnet durch**
eine röhrenförmige Hülle (21), die eine Innenumfangsfläche beinhaltet, wobei die röhrenförmige Hülle (21) die Biegeplatte und das Paar von vorstehenden Abschnitten (P1, P2) in einem Zustand aufnimmt, in dem obere Abschnitte des Paares von vorstehenden Abschnitten (P1, P2) in Kontakt mit der Innenumfangsfläche sind,
wobei:
der Dehnungsmesser (112) an einer Region angebracht ist, die sandwichartig zwischen dem Paar von vorstehenden Abschnitten (P1, P2) angeordnet ist, wobei die Region in der Biegeplatte liegt; und die röhrenförmige Hülle (21) derart konfiguriert ist, dass ein Außendurchmesser der röhrenförmigen Hülle (21) dadurch vergrößert wird, dass das Paar von vorstehenden Abschnitten (21) die röhrenförmige Hülle schiebt.

2. Dehnungssensor nach Anspruch 1, wobei
ein Außendurchmesser der röhrenförmigen Hülle (21) durch eine relative Bewegung des Paares von vorstehenden Abschnitten (P1, P2) und der röhrenförmigen Hülle (21) in eine axiale Richtung der röhrenförmigen Hülle vergrößert wird.

3. Dehnungssensor nach Anspruch 1 oder 2, wobei
ein Schlitz, der sich in der axialen Richtung der röhrenförmigen Hülle erstreckt, in der röhrenförmigen Hülle (21) ausgebildet ist.

4. Dehnungssensor nach einem der Ansprüche 1 bis 3, wobei
das Paar von vorstehenden Abschnitten (P1, P2) symmetrisch in Bezug auf die Achse der röhrenförmigen Hülle (21) ausgebildet ist.

5. Dehnungssensor nach einem der Ansprüche 1 bis 4, wobei
obere Abschnitte des Paares von vorstehenden Abschnitten (P1, P2) in einer sich verjüngenden Form in Bezug auf die axiale Richtung der röhrenförmigen Hülle (21) geneigt sind.

6. Dehnungssensor nach einem der Ansprüche 1 bis 5 wobei
eine Innenumfangsfläche der röhrenförmigen Hülle (21) in einer sich verjüngenden Form in Bezug auf die axiale Richtung der röhrenförmigen Hülle (21) geneigt ist.

7. Dehnungssensor nach einem der Ansprüche 1 bis 6, ferner umfassend:
einen Verbinder (12), der dazu konfiguriert ist, die Biegeplatte und die röhrenförmige Hülle (21) miteinander zu verbinden, sodass sie in der axialen Richtung der röhrenförmigen Hülle relativ beweglich sind.

8. Dehnungssensor nach einem der Ansprüche 1 bis 7, ferner umfassend:
einen Ausrichtungsanpassungsunterstützungsabschnitt, der dazu konfiguriert ist, eine Ausrichtungsanpassung der Biegeplatte im Inneren des Subjekts zu unterstützen.

9. Dehnungssensor nach einem der Ansprüche 1 bis 8, wobei
der Dehnungsmesser Folgendes beinhaltet zwei in eine erste Richtung dehnungsempfindliche Elemente, die dazu konfiguriert sind, eine in einer ersten Richtung erzeugte Dehnung zu messen, wobei das Paar von vorstehenden Abschnitten (P1, P2) von der Biegeplatte in die erste Richtung vorsteht, und zwei in eine zweite Richtung dehnungsempfindliche Elemente, die dazu konfiguriert sind, eine in eine zweite Richtung orthogonal zu der ersten Richtung in der Ebene der Biegeplatte erzeugte Dehnung zu messen, und
die zwei in eine erste Richtung dehnungsempfindlichen Elemente und die zwei in eine zweite Richtung dehnungsempfindlichen Elemente eine Wheatstonesche Brückenschaltung ausbilden.

10. Verfahren zum Messen einer in einer Messrichtung erzeugten Dehnung eines Subjekts, umfassend:
Ausbilden eines Lochs, das sich in eine Richtung orthogonal zu der Messrichtung erstreckt, in dem Subjekt;
**gekennzeichnet durch**
einsetzen eines Dehnungssensors nach einem der Ansprüche 1 bis 7 in das Loch; und
Inkontaktbringen einer Außenumfangsfläche der röhrenförmigen Hülle (21) mit einer Innenumfangsfläche des Lochs durch Vergrößern eines Außendurchmessers der röhrenförmigen Hülle (21).

## Revendications

1. Capteur de contrainte installé à l'intérieur d'un sujet, le capteur de contrainte comprenant :
une plaque de flexion présentant une forme de plaque plate ;
une jauge de contrainte (112) fixée à la plaque de flexion ;
une paire de parties saillantes (P1, P2) saillant de la plaque de flexion des deux côtés selon une direction dans le plan de la plaque de flexion ; et
**caractérisé par**
un couvercle tubulaire (21) incluant une surface périphérique intérieure, le couvercle tubulaire (21) logeant la plaque de flexion et la paire de parties saillantes (P1, P2) dans un état où les parties supérieures de la paire de parties saillantes (P1, P2) sont en contact avec la surface périphérique intérieure,
dans lequel :
la jauge de contrainte (112) est fixée à une région prise en sandwich entre la paire de parties saillantes (P1, P2), la région se trouvant dans la plaque de flexion ; et le couvercle tubulaire (21) est configuré de telle sorte qu'un diamètre extérieur du couvercle tubulaire (21) est augmenté par la paire de parties saillantes (21) poussant le couvercle tubulaire.

2. Capteur de contrainte selon la revendication 1, dans lequel
un diamètre extérieur du couvercle tubulaire (21) est augmenté par un mouvement relatif de la paire de parties saillantes (P1, P2) et du couvercle tubulaire (21) dans une direction axiale du couvercle tubulaire.

3. Capteur de contrainte selon la revendication 1 ou 2, dans lequel
une fente s'étendant dans la direction axiale du couvercle tubulaire est formée dans le couvercle tubulaire (21).

4. Capteur de contrainte selon l'une quelconque des revendications 1 à 3, dans lequel
la paire de parties saillantes (P1, P2) est formée symétriquement par rapport à l'axe du couvercle tubulaire (21).

5. Capteur de contrainte selon l'une quelconque des revendications 1 à 4, dans lequel
des parties supérieures de la paire de parties saillantes (P1, P2) sont inclinées selon une forme effilée par rapport à la direction axiale du couvercle tubulaire (21).

6. Capteur de contrainte selon l'une quelconque des revendications 1 à 5, dans lequel
une surface périphérique intérieure du couvercle tubulaire (21) est inclinée selon une forme effilée par rapport à la direction axiale du couvercle tubulaire (21).

7. Capteur de contrainte selon l'une quelconque des revendications 1 à 6, comprenant en outre :
un connecteur (12) configuré pour relier la plaque de flexion et le couvercle tubulaire (21) l'un à l'autre pour qu'ils soient relativement mobiles dans la direction axiale du couvercle tubulaire.

8. Capteur de contrainte selon l'une quelconque des revendications 1 à 7, comprenant en outre :
une partie d'aide au réglage de l'orientation configurée pour aider au réglage de l'orientation de la plaque de flexion à l'intérieur du sujet.

9. Capteur de contrainte selon l'une quelconque des revendications 1 à 8, dans lequel
la jauge de contrainte comprend deux éléments sensibles à la contrainte selon une première direction, configurés pour mesurer une contrainte générée dans une première direction, la paire de parties saillantes (P1, P2) saillant à partir de la plaque de flexion dans la première direction, et deux éléments sensibles à la contrainte selon une deuxième direction, configurés pour mesurer une contrainte générée dans une deuxième direction orthogonale à la première direction dans le plan de la plaque de flexion, et
les deux éléments sensibles à la contrainte dans la première direction et les deux éléments sensibles à la contrainte dans la deuxième direction forment un circuit en pont de Wheatstone.

10. Procédé de mesure d'une contrainte d'un sujet générée dans une direction de mesure comprenant :
la formation d'un orifice s'étendant dans une direction orthogonale à la direction de mesure dans le sujet ;
**caractérisé par**
l'insertion d'un capteur de contrainte selon l'une quelconque des revendications 1 à 7 dans l'orifice ; et
la mise en contact d'une surface périphérique extérieure du couvercle tubulaire (21) avec une surface périphérique intérieure de l'orifice en augmentant le diamètre extérieur du couvercle tubulaire (21).
